# EUROPÄISCHE PATENTSCHRIFT

(11) **EP 4 197 863 B1**
(45) Veröffentlichungstag und Bekanntmachung des Hinweises auf die Patenterteilung: **25.09.2024**
(21) Anmeldenummer: 22212258.2
(22) Anmeldetag: 08.12.2022
(51) Int. Cl.: B60R 19/48

(54) **AUSSENVERKLEIDUNGSTEILANORDNUNG UND VERFAHREN ZUR LACKIERUNG UND WEITERVERARBEITUNG EINER AUSSENVERKLEIDUNGSANORDNUNG**
EXTERIOR TRIM COMPONENT ARRANGEMENT AND METHOD FOR PAINTING AND FURTHER PROCESSING AN EXTERIOR TRIM COMPONENT ARRANGEMENT
ENSEMBLE DE PIÈCES DE REVÊTEMENT EXTÉRIEUR ET PROCÉDÉ DE LAQUAGE ET DE TRAITEMENT ULTÉRIEUR D'UN ENSEMBLE DE PIÈCES DE REVÊTEMENT EXTÉRIEUR

(30) Priorität: 20.12.2021 DE 102021133782
(43) Veröffentlichungstag der Anmeldung: 21.06.2023
(73) Patentinhaber: REHAU Automotive SE & Co. KG, 95111 Rehau (DE)
(72) Erfinder: Lochmann, Christopher, 38126 Braunschweig (DE)

(56) Entgegenhaltungen:
- CN-U- 210 062 590
- DE-A1- 102015 122 231
- JP-A- 2003 230 863
- JP-A- 2006 314 928
- US-A1- 2014 183 884

## Beschreibung

Die vorliegende Erfindung betrifft eine Außenverkleidungsteilanordnung und beschreibt ein Verfahren zur Lackierung und Weiterverarbeitung einer Außenverkleidungsanordnung.

Eine gattungsgemäße Außenverkleidungsteilanordnung umfasst eine spritzgegossene Stoßfängerverkleidung mit wenigstens einer Öffnung und umfasst wenigstens einen Deckel der dafür vorgesehen ist diese Öffnung zu verdecken, wobei der Deckel wenigstens ein von dem Deckelgrundkörper abstehendes erstes Rastelement und wenigstens ein von dem Deckelgrundkörper abstehendes weiteres Rastelement aufweist, wobei die Stoßfängerverkleidung wenigstens eine erste Rastelementaufnahme für das wenigstens eine erste Rastelement und wenigstens eine weitere Rastelementaufnahme für das weitere Rastelement aufweist, wobei die erste Rastelementaufnahme im Bereich der zu verschließenden Öffnung der Stoßfängerverkleidung ausgebildet ist und das erste Rastelement und die erste Rastelementaufnahme dafür vorgesehen sind in ihrem Verbindungszustand den Deckel in der die Öffnung verdeckenden Position zu halten.

Derzeit wird bei derartigen Außenverkleidungsanordnungen der Deckel in der vorgesehenen Öffnung in der die Öffnung verdeckenden Position des Deckel verrastet und anschließend lackiert. Das führt dazu, dass es aufgrund der unterschiedlichen Materialen, die üblicherweise für das Material des Deckels und für das Material der Stoßfängerverkleidung verwendet werden, zu einem unterschiedlichen Rückstellverhalten der Materialien kommt, weswegen die Deckel nach der Lackierung bzw. insbesondere nach der Trocknung nicht mehr spielfrei sitzen und somit ein erhöhter Abstimmaufwand zwischen den beiden Bauteilen (Stoßfängerverkleidung und Deckel) entsteht.

Gattungsgemäße Außenverkleidungsanordnungen können den Dokumenten JP 2003 230 863 A, US 2014/183884 A1, DE 10 2015 122 231 A1 oder JP 2006 314 928 A entnommen werden.

Die Erfindung stellt sich daher die Aufgabe eine Außenverkleidungsteilanordnung und ein Verfahren zur Lackierung und Weiterverarbeitung einer Außenverkleidungsanordnung mit den eingangs beschriebenen Merkmalen anzugeben, die gegenüber dem Stand der Technik eine zuverlässige Verbindung von Deckel und Stoßfängerverkleidung ermöglicht.

Erfindungsgemäß wird diese Aufgabe gelöst durch eine Außenverkleidungsteilanordnung mit den Merkmalen des Anspruchs 1.

Die Ausgestaltung der Außenverkleidungsanordnung ermöglicht eine Art "Opfergeometrie" zur Aufnahme des Deckels in der Stoßfängerverkleidung zu realisieren, die während des Aufbringens wenigstens einer Lackschicht auf zumindest die bei bestimmungsgemäßer Verwendung sichtbaren Außenseiten der Stoßfängerverkleidung und des Deckels, den Deckel in einer temporären Lackieraufnahme außerhalb der Öffnung hält. Die eigentliche Verrastung des Deckels in der Stoßfängerverkleidung bleibt folglich hiervon unberührt, sodass der eigentliche Verbindungszustand des Deckels in der die Öffnung verdeckenden Position nicht durch das Lackierverfahren und die hierbei auftretenden hohen Temperaturen beeinträchtigt, insbesondere nicht gelockert wird. Hierdurch kann der Abstimmaufwand zwischen den Bauteilen (Stoßfängerverkleidung und Deckel) erheblich minimiert werden. Der Deckel ist bevorzugt ebenfalls in einem Spritzgussverfahren hergestellt. Bevorzugt unterscheiden sich hierbei die polymeren Materialien des Deckels und der Stoßfängerverkleidung in ihrer Zähigkeit und/oder in ihrer Erweichungstemperatur.

In einer bevorzugten Ausgestaltung kann die weitere Rastelementaufnahme an einem zur späteren Abtrennung vorgesehenen Bereich der Stoßfängerverkleidung angeordnet sein.

Das Vorsehen der temporäre Lackieraufnahme an einem zur späteren Abtrennung vorgesehenen Bereich der Stoßfängerverkleidung bietet den Vorteil, dass die weitere Rastelementaufnahme, die nur zum Lackieren benötigt wird, an der Stoßfängerverkleidung nicht verbleibt. Hierdurch ergeben sich insbesondere Gewichtsvorteile. Der zur späteren Abtrennung vorgesehenen Bereich der Stoßfängerverkleidung kann insbesondere ein Steg sein, der zur Stabilisierung und/oder zur Handhabung der Stoßfängerverkleidung beim Lackieren der Stoßfängerverkleidung dient.

Das weitere Rastelement kann als Befestigungsaufnahme einen Aufnahmeschlitz aufweisen. Bei Deckeln des Standes der Technik wird in dem Deckel eine optionale Lasche mit einem Loch vorgesehen, um ein separates Fangband aufzunehmen. Diese Lasche muss bei der Herstellung des Deckels in einem Spritzgussverfahren mit einem zusätzlichen Schieber entformt werden. Bei der Ausbildung der Befestigungsaufnahme als ein Aufnahmeschlitz kann dieser Schieber eingespart werde.

Bevorzugt ist die weitere Rastelementaufnahme nicht dafür vorgesehen den Deckel in der die Öffnung verdeckenden Position zu halten. Wie erläutert ist es gerade das Ziel der Erfindung, dass die Verbindung von erster Rastelementaufnahme und Deckel durch Relaxationsvorgänge der unterschiedlichen Materialien beeinträchtigt wird.

Die weitere Rastelementaufnahme ist bevorzugt von der Öffnung wenigstens 5 cm, besonders bevorzugt wenigstens 10 cm beabstandet.

Teil der Erfindung ist eine vorstehend beschriebene Außenverkleidungsteilanordnung, wobei zusätzlich ein separates Fangband vorgesehen ist, das in der Befestigungsaufnahme des weiteren Rastelelement klemmend befestigt ist.

Ein Verfahren zur Lackierung und Weiterverarbeitung einer vorstehend beschriebenen Au-ßenverkleidungsanordnungumfasst die folgenden Schritte:
- Verbinden der weiteren Rastelementaufnahme der Stoßfängerverkleidung mit dem weiteren Rastelement des Deckels;
- Aufbringen wenigstens einer Lackschicht auf zumindest die bei bestimmungsgemäßer Verwendung sichtbaren Außenseiten der Stoßfängerverkleidung und des Deckels;
- Lösen des Verbindungszustands von der weiteren Rastelementaufnahme mit dem weiteren Rastelement;
- Verbinden der ersten Rastelementaufnahme mit dem wenigstens einen ersten Rastelement zum Verdecken der Öffnung der Stoßfängerverkleidung. Das Verfahren selbst gehört nicht zur Erfindung.

In einer bevorzugten Variante des Verfahrens ist die weitere Rastelementaufnahme an einem zur späteren Abtrennung vorgesehenen Bereich der Stoßfängerverkleidung angeordnet und nach dem Aufbringen der Lackschicht wird dieser Bereich von dem Rest der Stoßfängerverkleidung abgetrennt.

### Ausführungsbeispiele

Im Folgenden wird die Erfindung anhand lediglich Ausführungsbeispiele darstellender Zeichnung erläutert. Es zeigen schematisch:
- Fig. 1 und Fig. 2: Ansichten der Außenseite der Außenverkleidungsteilanordnung;
- Fig. 3: Detail-Rückansicht der weiteren Rastelementaufnahme;
- Fig. 4 und Fig. 5: Detail-Ansichten des Deckels;
- Fig. 6 und Fig. 7: Detail-Rückansicht der Stoßfängerverkleidung;
- Fig. 8 und Fig. 9: Detail-Ansichten des Deckels in der temporären Lackieraufnahme;
- Fig. 10 und Fig. 11: Detail-Ansichten des Deckels in der in der die Öffnung verdeckenden Position P1;
- Fig. 12 und Fig. 13: Detail-Ansichten der Erfindung, bei der ein separates Fangband vorgesehen ist;
- Fig. 14: Detail-Ansicht des separaten Fangbands.

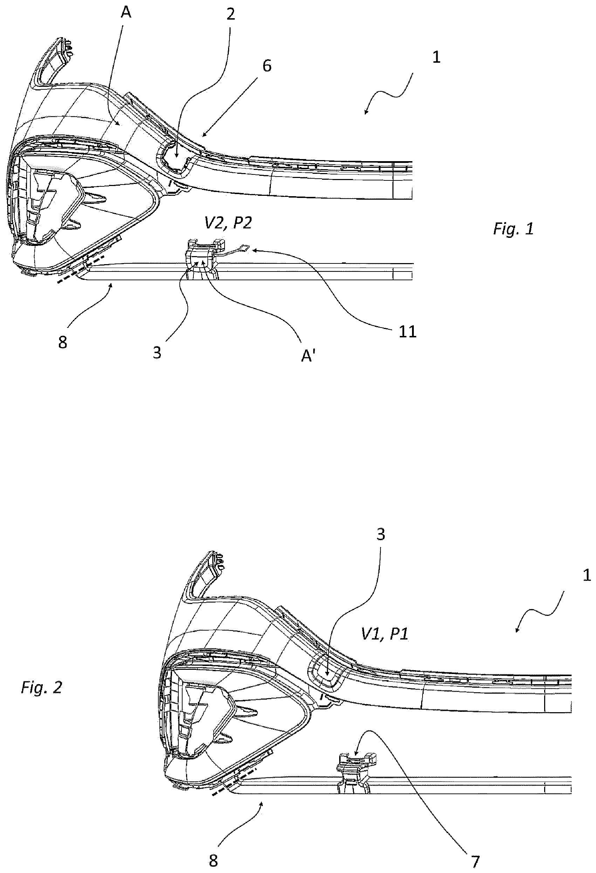

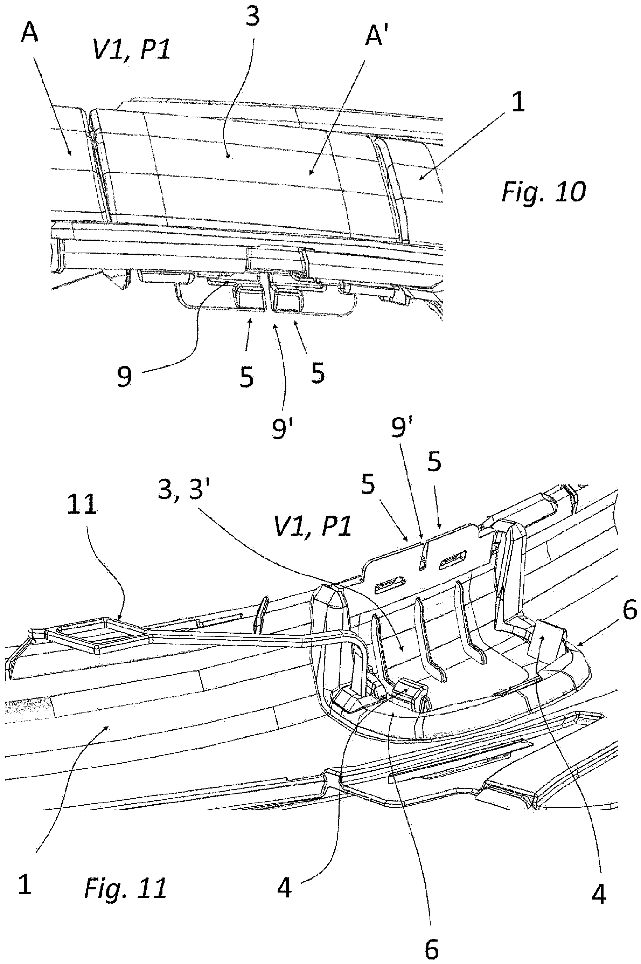

In den Figuren werden gleiche oder funktionsgleiche Elemente mit den gleichen Bezugszeichen versehen Der in den Figuren 1, 4, 5, 7, 8-11 dargestellte Deckel gehört nicht zur Erfindung.

Die Fig. 1 und die Fig. 2 zeigen eine Außenverkleidungsteilanordnung umfassend eine spritzgegossene Stoßfängerverkleidung 1 mit wenigstens einer Öffnung 2 (vgl. Fig. 1) und umfassend wenigstens einen Deckel 3 der dafür vorgesehen ist diese Öffnung 2 zu verdecken (vgl. Fig. 2).

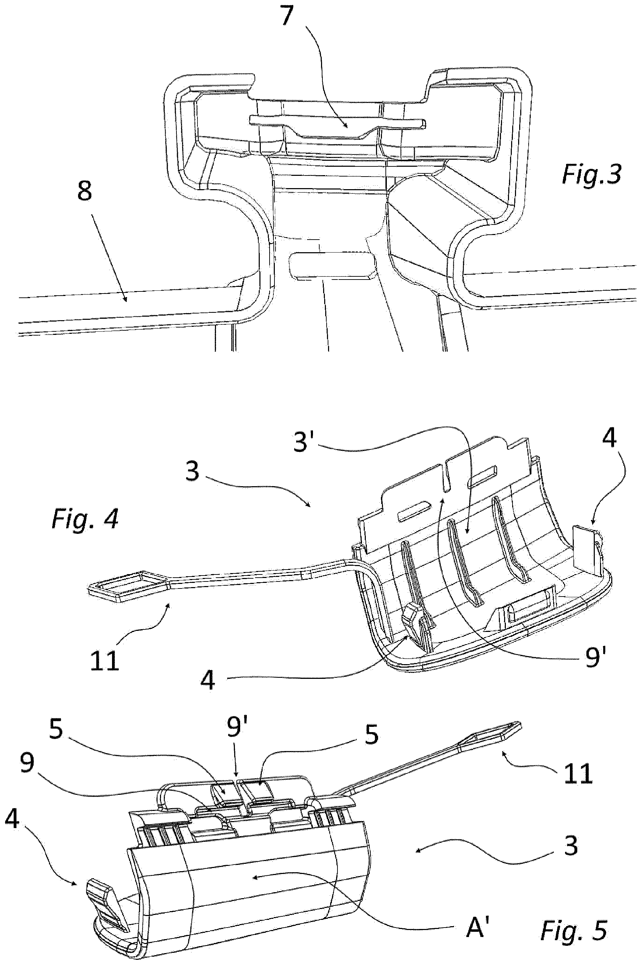

Der Deckel 3 weist wenigstens ein von dem Deckelgrundkörper 3' abstehendes erstes Rastelement 4 und wenigstens ein von dem Deckelgrundkörper 3' abstehendes weiteres Rastelement 5 auf (vgl. Fig. 4 und Fig. 5).

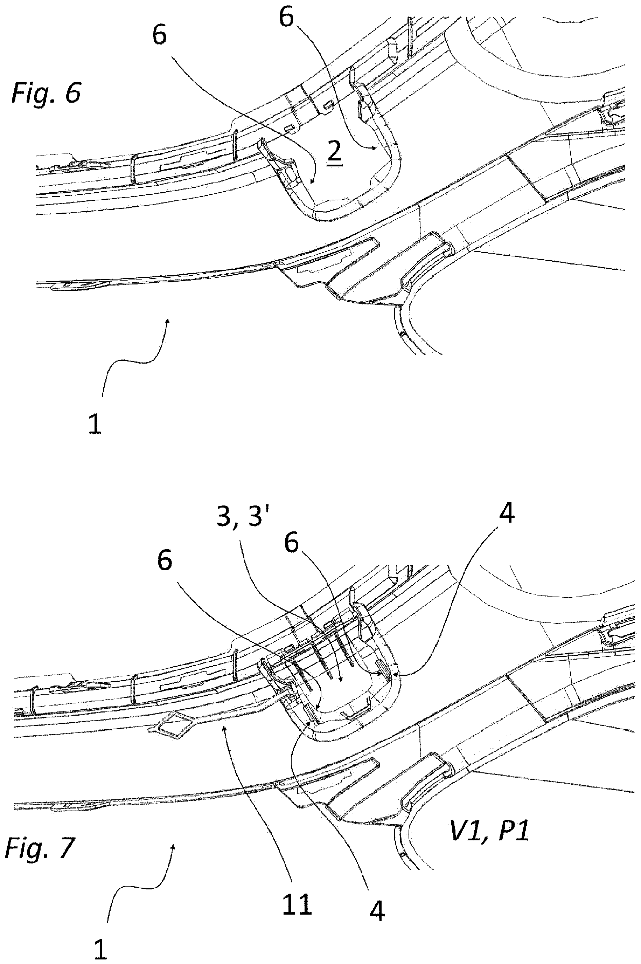

Die Stoßfängerverkleidung 1 weist wenigstens eine erste Rastelementaufnahme 6 für das wenigstens eine erste Rastelement 4 und wenigstens eine weitere Rastelementaufnahme 7 für das weitere Rastelement 5 auf (vgl. Fig. 3 und Fig. 6).

Die erste Rastelementaufnahme 6 ist im Bereich der zu verschließenden Öffnung 2 der Stoßfängerverkleidung 1 ausgebildet und das erste Rastelement 4 und die erste Rastelementaufnahme 6 sind dafür vorgesehen in ihrem Verbindungszustand V1 den Deckel 3 in der die Öffnung 2 verdeckenden Position P1 zu halten (vgl. Fig. 7, Fig. 10 und Fig. 11).

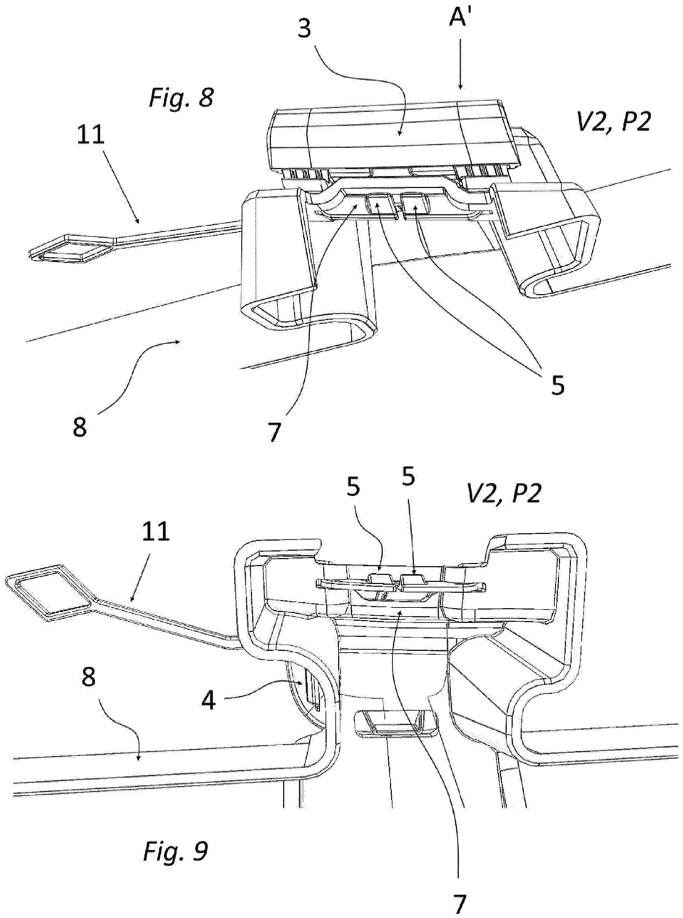

Die weitere Rastelementaufnahme 7 ist von der Öffnung 2 beabstandet und diese weitere Rastelementaufnahme 7 ist dafür vorgesehen in ihrem Verbindungszustand V2 mit dem weiteren Rastelement 5 als temporäre Lackieraufnahme P2 des Deckels zu fungieren (vgl. Fig. 8 und Fig. 9).

Die weitere Rastelementaufnahme 7 ist an einem zur späteren Abtrennung vorgesehenen Bereich 8 der Stoßfängerverkleidung 1 angeordnet (vgl. Fig. 1 und Fig. 2 - Trennlinie jeweils angedeutet durch eine Strichpunktlinie).

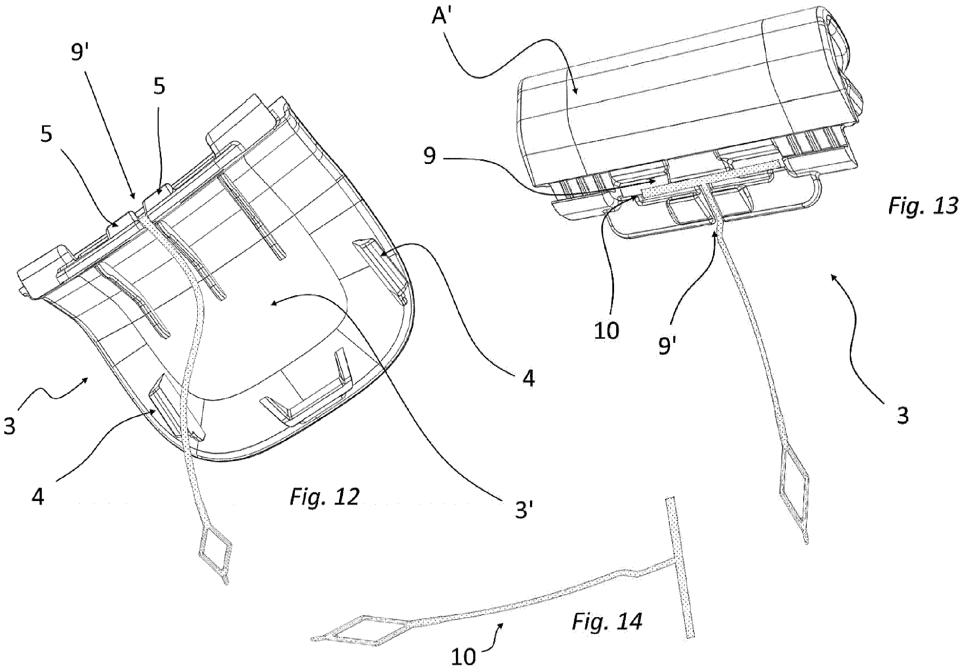

Das weitere Rastelelement 5 weist zusätzlich eine Befestigungsaufnahme 9 auf, geeignet zur Befestigung eines separaten Fangbandes 10 des Deckels 3. Das weitere Rastelement 5 weist hierfür als Befestigungsaufnahme 9 einen Aufnahmeschlitz 9' auf (vgl. Fig. 12, Fig. 13 und Fig. 14).

Die weitere Rastelementaufnahme 7 ist nicht dafür vorgesehen den Deckel 3 in der die Öffnung 2 verdeckenden Position zu halten.

Die weitere Rastelementaufnahme 7 ist von der Öffnung 2 wenigstens 5 cm beabstandet. Bei einer in Fig. 12 und Fig. 13 gezeigten Variante ist erfindungsgemäß bei der vorstehend beschriebenen Außenverkleidungsteilanordnung zusätzlich ein separates Fangband 10 vorgesehen, das in der Befestigungsaufnahme 9 des weiteren Rastelelements 5 befestigt ist. Hierfür ist das separate Fangband 10 t-förmig ausgebildet, wobei ein Teil des Fangbands 10 in dem Aufnahmeschlitz 9' klemmend befestigt ist.

Ein Verfahren zur Lackierung und Weiterverarbeitung einer der vorstehend beschriebenen Außenverkleidungsanordnungen, das selbst nicht zur Erfindung gehört, umfasst die folgenden Schritte
- Verbinden der weiteren Rastelementaufnahme 7 der Stoßfängerverkleidung 1 mit dem weiteren Rastelement 5 des Deckels 3;
- Aufbringen wenigstens einer Lackschicht auf zumindest die bei bestimmungsgemäßer Verwendung sichtbaren Außenseiten A, A' der Stoßfängerverkleidung 1 und des Deckels 3;
- Lösen des Verbindungszustands von der weiteren Rastelementaufnahme 7 mit dem weiteren Rastelement 5;
- Verbinden der ersten Rastelementaufnahme 6 mit dem wenigstens einen ersten Rastelement 4 zum Verdecken der Öffnung 2 der Stoßfängerverkleidung 1.

Als auch nicht zur Erfindung gehörende Variante des Verfahrens ist die weitere Rastelementaufnahme 7 an einem zur späteren Abtrennung vorgesehenen Bereich 8 der Stoßfängerverkleidung 1 angeordnet und dieser Bereich 8 wird nach dem Aufbringen der Lackschicht von dem Rest der Stoßfängerverkleidung 1 abgetrennt.

## Patentansprüche

1. Außenverkleidungsteilanordnung umfassend eine spritzgegossene Stoßfängerverkleidung (1) mit wenigstens einer Öffnung (2) und umfassend wenigstens einen Deckel (3) der dafür vorgesehen ist diese Öffnung (2) zu verdecken,
wobei der Deckel (3) wenigstens ein von dem Deckelgrundkörper (3') abstehendes erstes Rastelement (4) und wenigstens ein von dem Deckelgrundkörper (3') abstehendes weiteres Rastelement (5) aufweist,
wobei die Stoßfängerverkleidung (1) wenigstens eine erste Rastelementaufnahme (6) für das wenigstens eine erste Rastelement (4) und wenigstens eine weitere Rastelementaufnahme (7) für das weitere Rastelement (5) aufweist,
wobei die erste Rastelementaufnahme (6) im Bereich der zu verschließenden Öffnung (2) der Stoßfängerverkleidung (1) ausgebildet ist und das erste Rastelement (4) und die erste Rastelementaufnahme (6) dafür vorgesehen sind in ihrem Verbindungszustand (V1) den Deckel (3) in der die Öffnung (2) verdeckenden Position (P1) zu halten, wobei
die weitere Rastelementaufnahme (7) von der Öffnung (2) beabstandet ist und diese weitere Rastelementaufnahme (7) dafür vorgesehen ist in ihrem Verbindungszustand (V2) mit dem weiteren Rastelement (5) als temporäre Lackieraufnahme (P2) des Deckels zu fungieren,
**dadurch gekennzeichnet, dass**
das weitere Rastelelement (5) zusätzlich eine Befestigungsaufnahme (9), geeignet zur Befestigung eines separaten Fangbandes (10) des Deckels (3) aufweist und zusätzlich ein separates Fangband (10) vorgesehen ist, das in der Befestigungsaufnahme (9) des weiteren Rastelelement (5) klemmend befestigt ist.

2. Außenverkleidungsteilanordnung nach Anspruch 1, **dadurch gekennzeichnet, dass** die weitere Rastelementaufnahme (7) an einem zur späteren Abtrennung vorgesehenen Bereich (8) der Stoßfängerverkleidung (1) angeordnet ist.

3. Außenverkleidungsteilanordnung nach Anspruch 1 oder 2, **dadurch gekennzeichnet, dass** das weitere Rastelement (5) als Befestigungsaufnahme (9) einen Aufnahmeschlitz (9`) aufweist.

4. Außenverkleidungsteilanordnung nach einem der vorstehenden Ansprüche, **dadurch gekennzeichnet, dass** die weitere Rastelementaufnahme (7) nicht dafür vorgesehen ist den Deckel (3) in der die Öffnung (2) verdeckenden Position zu halten.

5. Außenverkleidungsteilanordnung nach einem der vorstehenden Ansprüche, **dadurch gekennzeichnet, dass** die weitere Rastelementaufnahme (7) von der Öffnung (2) wenigstens 5 cm beabstandet ist.

## Claims

1. External cladding part arrangement comprising an injection-moulded bumper cladding (1) with at least one opening (2) and comprising at least one cover (3) which is intended to cover this opening (2),
wherein the cover (3) has at least one first detent element (4) protruding from the cover main body (3') and at least one further detent element (5) protruding from the cover main body (3')
wherein the bumper cladding (1) has at least one first detent element receptacle (6) for the at least one first detent element (4) and at least one further detent element receptacle (7) for the further detent element (5),
wherein the first detent element receptacle (6) is formed in the region of the opening (2) of the bumper cladding (1) to be closed and the first detent element (4) and the first detent element receptacle (6) are intended, in their connection state (V1), to hold the cover (3) in the position (P1) covering the opening (2),
wherein the further detent element receptacle (7) is distanced from the opening (2) and this further detent element receptacle (7) is intended, in its connection state (V2) with the further detent element (5), to function as a temporary painting support (P2) of the cover,
**characterised in that**
the further detent element (5) additionally has a fastening receptacle (9), suitable for fastening a separate catch strap (10) of the cover (3) and additionally a separate catch band (10) is provided, which is fastened in a clamped fashion in the fastening receptacle (9) of the further detent element (5).

2. External cladding part arrangement according to claim 1, **characterised in that** the further detent element receptacle (7) is disposed on a region (8) of the bumper cladding (1) provided for subsequent separation.

3. External cladding part arrangement according to claim 1 or 2, **characterised in that** the further detent element (5) has a receiving slot (9') as fastening receptacle (9).

4. External cladding part arrangement according to any one of the preceding claims, **characterised in that** the further detent element receptacle (7) is not intended to hold the cover (3) in the position covering the opening (2).

5. External cladding part arrangement according to any one of the preceding claims, **characterised in that** the further detent element receptacle (7) is distanced by at least 5 cm from the opening (2).

## Revendications

1. Agencement de pièces de garniture extérieure comprenant une garniture de pare-chocs moulée par injection (1) avec au moins une ouverture (2) et comprenant au moins un couvercle (3) qui est prévu pour recouvrir cette ouverture (2),
le couvercle (3) présentant au moins un premier élément d'encliquetage (4) dépassant du corps de base de couvercle (3') et au moins un autre élément d'encliquetage (5) dépassant du corps de base de couvercle (3'),
la garniture de pare-chocs (1) présentant au moins un premier logement d'élément d'encliquetage (6) pour l'au moins un premier élément d'encliquetage (4) et au moins un autre logement d'élément d'encliquetage (7) pour l'autre élément d'encliquetage (5),
le premier logement d'élément d'encliquetage (6) étant réalisé dans la zone de l'ouverture (2) à fermer de la garniture de pare-chocs (1) et le premier élément d'encliquetage (4) et le premier logement d'élément d'encliquetage (6) étant prévus pour maintenir, dans leur état de liaison (V1), le couvercle (3) dans la position (P1) recouvrant l'ouverture (2),
l'autre logement d'élément d'encliquetage (7) étant espacé de l'ouverture (2) et cet autre logement d'élément d'encliquetage (7) étant prévu, dans son état de liaison (V2) avec l'autre élément d'encliquetage (5), pour servir de logement de peinture temporaire (P2) du couvercle,
**caractérisé en ce que**
l'autre élément d'encliquetage (5) présente en outre un logement de fixation (9), approprié pour la fixation d'une bande d'arrêt séparée (10) du couvercle (3) et il est prévu en outre une bande d'arrêt séparée (10) qui est fixée par serrage dans le logement de fixation (9) de l'autre élément d'encliquetage (5).

2. Agencement de pièces de garniture extérieure selon la revendication 1, **caractérisé en ce que** l'autre logement d'élément d'encliquetage (7) est agencé sur une zone (8) de la garniture de pare-chocs (1) prévue pour la séparation ultérieure.

3. Agencement de pièces de garniture extérieure selon la revendication 1 ou 2, **caractérisé en ce que** l'autre élément d'encliquetage (5) présente une fente de réception (9') en tant que logement de fixation (9).

4. Agencement de pièces de garniture extérieure selon l'une quelconque des revendications précédentes, **caractérisé en ce que** l'autre logement d'élément d'encliquetage (7) n'est pas prévu pour maintenir le couvercle (3) dans la position recouvrant l'ouverture (2).

5. Agencement de pièces de garniture extérieure selon l'une quelconque des revendications précédentes, **caractérisé en ce que** l'autre logement d'élément d'encliquetage (7) est espacé d'au moins 5 cm de l'ouverture (2).
